# EUROPÄISCHE PATENTSCHRIFT

(11) **EP 4 153 372 B1**
(45) Veröffentlichungstag und Bekanntmachung des Hinweises auf die Patenterteilung: **25.03.2026**
(21) Anmeldenummer: 21739933.6
(22) Anmeldetag: 20.04.2021
(51) Int. Cl.: B23B 29/034, B23Q 11/00

(54) **MULTIFUNKTIONSSPINDEL FÜR EINE WERKZEUGMASCHINE**
MULTIFUNTION SPINDLE FOR A MACHINE TOOL
BROCHE MULTIFONCTION POUR MACHINE-OUTIL

(30) Priorität: 20.05.2020 DE 202020002230 U
(43) Veröffentlichungstag der Anmeldung: 29.03.2023
(73) Patentinhaber: NSH TECHNOLOGY GmbH, 09117 Chemnitz (DE)
(72) Erfinder: NAUMANN, Hans J., 09117 Chemnitz (DE); KOCHSIEK, Adolf, 33818 Leopoldshöhe (DE); HALLE, Moritz, 09127 Chemnitz (DE)
(74) Vertreter: Findeisen Neumann Scheit Partnerschaft mbB
(86) Internationale Anmeldenummer: PCT/DE2021/000093
(87) Internationale Veröffentlichungsnummer: WO 2021/233490

(56) Entgegenhaltungen:
- EP-A1- 3 216 557
- EP-B1- 0 922 528
- FR-A1- 2 561 555

## Beschreibung

Die Erfindung betrifft eine Multifunktionsspindel für eine Werkzeugmaschine zur spanenden Bearbeitung von Werkstücken, umfassend ein Spindelgehäuse, einen Drehantrieb und eine Werkzeugaufnahmeeinheit, wobei die Werkzeugaufnahmeeinheit innerhalb des Spindelgehäuses angeordnet und gegenüber dem Spindelgehäuse um eine quer zur Rotationsachse liegende Achse schwenkbar ausgeführt ist.

Werkzeugmaschinen zur spanenden Bearbeitung von Werkstücken sind in zahlreichen Ausführungen bekannt. Bei Drehmaschinen wird das Werkstück gedreht, während das Werkzeug feststehend sowohl axial als auch radial gegenüber dem Werkstück bewegt wird, um aus dem Werkstück runde, rotationssymmetrische Konturen auszugestalten. Bei Bohrmaschinen rotiert das Werkzeug und wird gegenüber dem feststehenden Werkstück vorgetrieben, um im Werkstück Bohrungen auszugestalten. Bei Fräsmaschinen wird ein rotierendes Werkzeug gegenüber einem feststehenden Werkstück radial und axial bewegt, um Fräsnuten, Fräsflächen oder Freiformflächen im Werkstück auszugestalten. Bei den vorstehend beschriebenen Werkzeugmaschinentypen werden die Werkzeuge überwiegend über eine Werkzeugschnittstelle in einer Werkzeugspindel aufgenommen und in dieser fest eingespannt. Eine Werkzeugspindel umfasst prinzipiell einen Drehantrieb, eine rotierende Antriebsachse und eine Abtriebsachse, in welche eine Werkzeugaufnahme integriert ist. Derartige Werkzeugspindeln werden auch in Bearbeitungszentren verwendet und dabei automatisch mit den entsprechenden Werkzeugen bestückt. Weiterhin sind solche Werkzeugspindeln für Werkzeugmaschinen zur Herstellung von unrunden Konturen geeignet. Diese Bearbeitungen werden üblicherweise als Unrund- oder Polygondrehen bezeichnet. Dabei werden ein sich drehendes Werkzeug mit einem Schneidkopf und ein sich ebenfalls drehendes Werkstück hinsichtlich ihrer Umdrehungen relativ zueinander gesteuert.

Die Werkzeugspindeln mussten für die unterschiedlichen spanenden Bearbeitungsverfahren zunächst jeweils spezifisch modifiziert werden. Aus EP 3 216 557 A1 ist inzwischen jedoch eine multifunktional einsetzbare Werkzeugspindel bekannt, die sowohl für konventionelle Bearbeitungen wie Drehen, Bohren und Fräsen als auch für neuartige Bearbeitungen wie das Polygondrehen geeignet ist. Diese Werkzeugspindel weist in an sich bekannter Weise ein Gehäuse, einen Drehantrieb und eine Werkzeugaufnahmeeinheit auf. Nunmehr ist die Werkzeugaufnahmeeinheit jedoch innerhalb des Spindelgehäuses angeordnet und gegenüber dem Spindelgehäuse um eine quer zur Antriebsachse liegende Achse bewegbar ausgeführt.

Ein derartiges Grundprinzip einer für unterschiedliche spanende Bearbeitungsverfahren auf einer Werkzeugmaschine geeigneten Werkzeugspindel wird im Rahmen der vorliegenden Erfindungsbeschreibung nachfolgend als "Multifunktionsspindel" bezeichnet.

Obwohl das Grundprinzip einer solchen Multifunktionsspindel interessante Möglichkeiten für zahlreiche Anwendungsfälle bietet, wurde bisher nur eine geringe Akzeptanz am Markt erreicht. Dies liegt vermutlich an funktionellen Mängeln, die beim Polygondrehen mit höheren Drehzahlen auftreten, In solchen Betriebspunkten kann mit den in EP 3 216 557 A1 beschriebenen Ausführungen von Messtechnik, Kühlmittelzuführung und Unwuchtausgleich der dann erhebliche Einfluss von Unwuchten nur ungenügend kompensiert werden.

Ein ähnliches Prinzip einer solchen Multifunktionsspindel ist in EP 0 922 528 B1 beschrieben, wobei vermutlich durch den Einsatz nur eines Messsystems entweder die notwendige Genauigkeit in der Lagepositionierung oder die funktionale Sicherheit der quer zur Antriebsachse liegenden Achse hergestellt werden kann. Allerdings könnte eine derartige Spindel aufgrund der fehlenden Positioniergenauigkeit oder der nicht funktional sicheren Ausführung nicht gewerblich verwendet werden.

Aufgabe der Erfindung ist es, eine Multifunktionsspindel zu schaffen, die insbesondere beim Drehen von Polygonprofilen eine schnelle und weitgehend vollständige Kompensation von auftretenden Unwuchten ermöglicht sowie eine Erhöhung der Positioniergenauigkeit der quer zur Antriebsachse liegenden Achse bei gleichzeitiger Herstellung der funktionalen Sicherheit.

Diese Aufgabe wird gelöst, indem zur Erhöhung der Positioniergenauigkeit an die Werkzeugaufnahmeeinheit mindestens zwei voneinander unabhängige und direkt nebeneinander angeordnete Messsysteme zur voneinander unabhängigen Erfassung von gleichen Positionswinkeln angeschlossen sind, mit denen die gemessenen Positionswinkelsignale über eine Übertragungseinheit auf mindestens zwei voneinander unabhängigen Übertragungspfaden an eine Steuerung der mit der Multifunktionsspindel ausgestatteten Werkzeugmaschine übertragbar sind. Dabei wird jeweils mindestens ein Übertragungspfad zur Lageregelung und jeweils mindestens ein Übertragungspfad zur Herstellung der funktionalen Sicherheit der quer zur Antriebsachse liegenden Schwenkachse verwendet. Die Übertragungseinheit versorgt mindestens zwei angeschlossene Messsysteme berührungslos mit Leistung. Die Übertragungseinheit besteht aus mindestens zwei Teilen, die relativ zueinander mit Spindeldrehzahl rotieren. Weiterhin weist die Übertragungseinheit eine zentrische Bohrung auf, durch welche Medienkanäle zentrisch geführt werden.

Eine Ausgestaltung sieht vor, dass die Spindelwelle mindestens zwei axial nebeneinanderliegende Ringnuten aufweist, in denen jeweils ein Ringsegment angeordnet ist, das über Kanäle mit Hydraulik derart beaufschlagbar ist, dass seine Relativposition innerhalb der Ringnut zwecks eines Unwuchtausgleiches verstellbar ist.

Eine weitere vorteilhafte Ausgestaltung sieht vor, dass das Spindelgehäuse mit mindestens zwei voneinander unabhängigen Drehdurchführungen ausgestattet ist. Mindestens eine dieser Drehdurchführungen ist zur Aufnahme von hydraulischen Zuführungskanälen für eine hydrodynamische Lagerung der Spindelwelle ausgestaltet. Eine solche hydrodynamische Lagerung entsteht infolge eines definiert abgestimmten Leckölstromes aus den Steuerkanälen der Drehdurchführung durch Überlagerung mit der Maschinenspindeldrehzahl. Die andere Drehdurchführung übergibt zentrisch und ohne Leckverluste vorzugsweise Kühlschmierstoff und Pneumatik. Eine derartige Trennung zwischen der hydraulischen Drehdurchführung und der Drehdurchführung für Kühlschmierstoff ermöglicht eine verunreinigungsfreie Ausbildung der hydrodynamischen Lagerung.

Weitere vorteilhafte Ausgestaltungen werden nachfolgend als Ausführungsbeispiel anhand der Zeichnung beschrieben. Es zeigen:
- Fig. 1: den Aufbau einer erfindungsgemäßen Multifunktionsspindel in Schnittdarstellung
- Fig. 2: die Anordnung eines ersten Ringsegmentes zum Ausgleich von Unwuchten
- Fig. 3: die Anordnung eines zweiten Ringsegmentes zum Ausgleich von Unwuchten

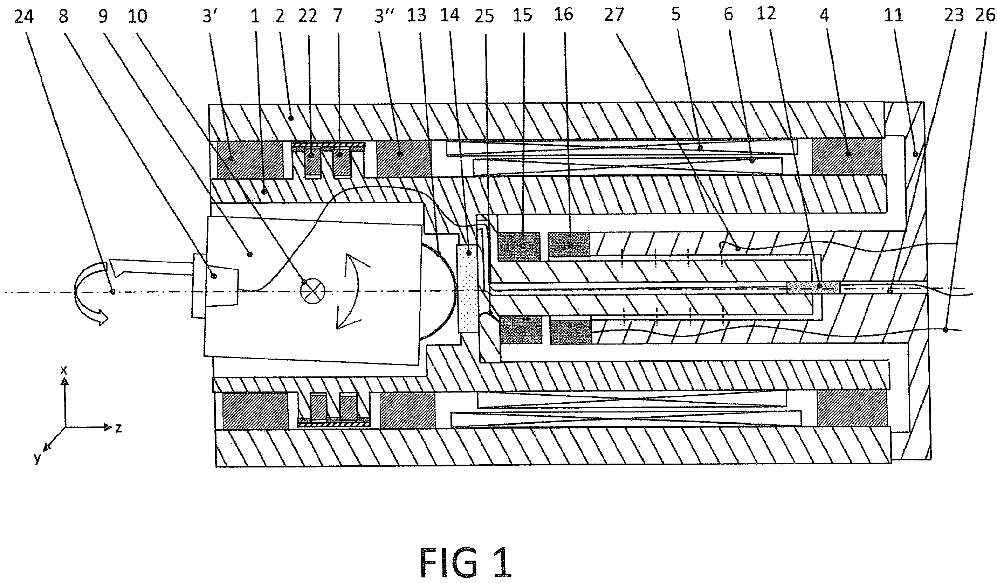

Die in **Fig. 1** dargestellte Multifunktionsspindel ist für eine Werkzeugmaschine zur spanenden Bearbeitung von Werkstücken konzipiert. In einem Spindelgehäuse 2 ist eine Spindelwelle 1 angeordnet. Die Spindelwelle 1 ist über eine vordere Lagerung 3 und eine hintere Lagerung 4 im Spindelgehäuse 2 abgestützt. Dabei wird die vordere Lagerung 3 durch zwei separate Lagersegmente 3' und 3" gebildet. Die Spindelwelle 1 rotiert um eine Achse 24. Der für diese Rotation notwendige Drehantrieb umfasst eine Statoreinheit 5 und eine Rotoreinheit 6.

Die Multifunktionsspindel weist mindestens zwei Drehdurchführungen bzw. Kanäle 11 für Hydraulik und Pneumatik sowie 12 und 23 für jeweils Kühlschmierstoff und Pneumatik auf.

Die Spindelwelle 1 weist an dem zum Werkstück (nicht dargestellt) gerichteten Endabschnitt eine Ausnehmung auf, in der eine Werkzeugaufnahmeeinheit 9 angeordnet ist. Diese Werkzeugaufnahmeeinheit 9 ist gegenüber dem Spindelgehäuse 2 um eine quer zur Rotationsachse 24 liegende Achse 10 schwenkbar ausgeführt. Die Schwenkbewegung ist mit einem bogenförmigen Pfeil stilisiert.

In der Werkzeugaufnahmeeinheit 9 ist an der zum Werkstück gerichteten Stirnseite ein Werkzeug 8 eingespannt. An der gegenüberliegenden Stirnseite ist eine Maßverkörperung 13 angeordnet. Unmittelbar benachbart zur Maßverkörperung 13 sind zwei Messköpfe 14 angeordnet. Im weiteren Verlauf sind hinter den Messköpfen 14 ein telemetrischer Sender 15 und ein telemetrischer Empfänger 16 angeordnet.

Zwischen den Lagersegmenten 3' und 3" sind mit geringem Abstand zueinander ein erstes Ringsegment 22 und ein zweites Ringsegment 7 angeordnet. Die beiden Ringsegmente 22 und 7 weisen eine kreisringförmige Kontur auf und sind in jeweils einer in Umfangsrichtung auf der Spindelwelle 1 umlaufenden Ringnut geführt. Mit den Ringsegmenten 7 und 22 wird eine Kompensation von Unwuchten beim Betrieb der Multifunktionsspindel realisiert, wobei dies noch näher erläutert wird. Hierfür sind mindestens zwei solcher Ringsegmente 22 und 7 notwendig. Es können jedoch auch weitere Ringsegmente vorgesehen werden.

Die beim Betrieb der Multifunktionsspindel zu erfassenden Daten und die gegebenenfalls zu veranlassenden Parameteränderungen werden drahtlos oder über Messleitungen generiert. In der Zeichnung sind diesbezügliche Messleitungen beispielhaft als Leitung 25 zu einem Messkopf 14, als Leitung 26 zu einem telemetrischen Empfänger 16 und als Leitung 27 zu Hydraulik- bzw. Pneumatikkomponenten stilisiert dargestellt.

Sofern beim Betrieb der Multifunktionsspindel während der spanenden Bearbeitung von Werkstücken eine Lageabweichung der Werkzeugaufnahmeeinheit 9 gegenüber ihrer optimalen Position und somit die Gefahr von Unwuchten auftritt, wird diese Unregelmäßigkeit durch die Maßverkörperung 13 in Wirkverbindung mit den Messköpfen 14 detektiert. Die entsprechenden Signale werden an die Maschinensteuerung übermittelt, die eine Änderung der zugeführten Hydraulikmengen in die Ringnuten der Ringsegmente 7 und 22 auslöst.

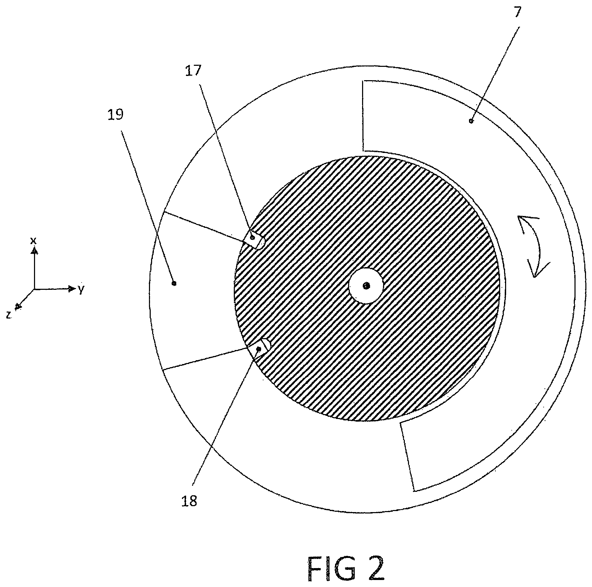

Dabei erfolgt gemäß **Fig. 2** eine Zuführung von Hydraulik über die Bohrungen 17 und 18 in die Ringnut, in welcher das Ringsegment 7 angeordnet ist. Die Bohrungen 17 und 18 sind jeweils an den Endabschnitten der durch eine Druckraumtrennung 19 unterbrochenen Ringnut angeordnet. Dadurch kann die Relativposition des Ringsegments 7 innerhalb dieser Ringnut verändert werden.

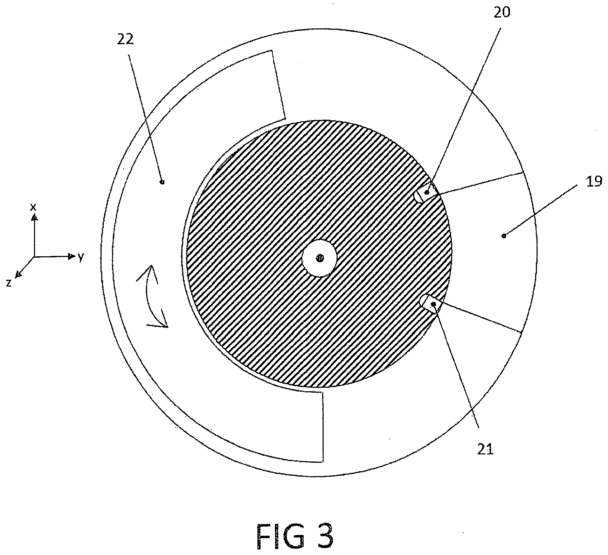

Gleichzeitig erfolgt gemäß **Fig. 3** eine Zuführung von Hydraulik über die Bohrungen 20 und 21 in die Ringnut, in welcher das Ringsegment 22 angeordnet ist. Die Bohrungen 20 und 21 sind jeweils an den Endabschnitten der durch eine Druckraumtrennung 19 unterbrochenen Ringnut angeordnet. Dadurch kann die Relativposition des Ringsegments 22 innerhalb dieser Ringnut verändert werden.

Somit ist es möglich, dass die Ringsegmente 7 und 22 in eine vorzugsweise um 180° zueinander versetzte Position verlagert werden, so dass die aufgetretenen Unwuchten sehr gut kompensiert werden können. Da Unwuchten insbesondere bei der spanenden Bearbeitung von Polygonprofilen auftreten, ist die erfindungsgemäße Multifunktionsspindel besonders vorteilhaft für das Polygondrehen geeignet.

### Bezugszeichenliste

- 1: Spindelwelle
- 2: Spindelgehäuse
- 3: vordere Lagerung der Spindelwelle
- 3': separates Lagersegment
- 3": separates Lagersegment
- 4: hintere Lagerung der Spindelwelle
- 5: Statoreinheit
- 6: Rotoreinheit
- 7: Ringsegment
- 8: Werkzeug
- 9: Werkzeugaufnahmeeinheit
- 10: Schwenkachse quer zur Spindel-Rotationsachse
- 11: Drehdurchführung Hydraulik und Pneumatik
- 12: Drehdurchführung Kühlschmierstoff und Pneumatik
- 13: Maßverkörperung
- 14: Messköpfe
- 15: telemetrischer Sender
- 16: telemetrischer Empfänger
- 17: Bohrung zur Ringnut für das Ringsegment 7
- 18: Bohrung zur Ringnut für das Ringsegment 7
- 19: Druckraumtrennung
- 20: Bohrung zur Ringnut für das Ringsegment 22
- 21: Bohrung zur Ringnut für das Ringsegment 22
- 22: Ringsegment
- 23: Drehdurchführung Kühlschmierstoff und Pneumatik
- 24: Rotationsachse der Spindelwelle
- 25: Leitung zu Messkopf
- 26: Leitung zu telemetrischem Empfänger
- 27: Leitung zu Hydraulik- / Pneumatikkomponenten

## Patentansprüche

1. Multifunktionsspindel für eine Werkzeugmaschine zur spanenden Bearbeitung von Werkstücken, umfassend ein Spindelgehäuse (2), einen Drehantrieb und eine Werkzeugaufnahmeeinheit (9), wobei die Werkzeugaufnahmeeinheit (9) innerhalb des Spindelgehäuses (2) angeordnet und gegenüber dem Spindelgehäuse (2) um eine quer zur Rotationsachse (24) liegende Achse (10) schwenkbar ausgeführt ist,
**dadurch gekennzeichnet,**
**dass** an die Werkzeugaufnahmeeinheit (9) mindestens zwei voneinander unabhängige und direkt nebeneinander angeordnete Messsysteme (14) zur Erfassung von gleichen Positionswinkeln der Werkzeugaufnahmeeinheit (9) angeschlossen sind, wobei eine an die Messsysteme (14) angeschlossene Übertragungseinheit vorgesehen ist, die zwei voneinander unabhängige Übertragungspfade bereitstellt, wobei die Messsysteme (14) dazu eingerichtet sind, gemessene Positionswinkelsignale über die Übertragungspfade an eine Steuerung einer mit der Multifunktionsspindel ausgestatteten Werkzeugmaschine zu übertragen, wobei der eine Übertragungspfad dazu verwendet werden kann,
die Lage der quer zur Antriebsachse liegenden Schwenkachse (10) zu regeln, und der andere Übertragungspfad dazu verwendet werden kann, die funktionale Sicherheit der quer zur Antriebsachse liegenden Schwenkachse herzustellen, und wobei die Übertragungseinheit dazu eingerichtet ist, die zwei Messsysteme (14) berührungslos mit Leistung zu versorgen, wobei die Übertragungseinheit aus mindestens zwei Teilen besteht, die dazu eingerichtet sind, relativ zueinander mit Spindeldrehzahl zu rotieren, und wobei die Übertragungseinheit eine zentrische Bohrung aufweist, durch welche Medienkanäle zentrisch geführt sind.

2. Multifunktionsspindel nach Anspruch 1, **dadurch gekennzeichnet,**
**dass** die Spindelwelle (1) mindestens zwei axial nebeneinanderliegende Ringnuten aufweist, in denen jeweils ein Ringsegment (7, 22) angeordnet ist, welches über Kanäle mit Hydraulik derart beaufschlagbar ist, dass seine Relativposition innerhalb der Ringnut verstellbar ist.

3. Multifunktionsspindel nach Anspruch 2, **dadurch gekennzeichnet,**
**dass** eine vordere Lagerung der Spindelwelle (1) mit zwei separaten Lagersegmenten (3', 3") ausgestaltet ist und dass zwischen den Lagersegmenten (3', 3") mit geringem Abstand zueinander ein erstes Ringsegment (7) und ein zweites Ringsegment (22) angeordnet sind, die jeweils eine kreisringförmige Kontur aufweisen und in jeweils einer in Umfangsrichtung auf der Spindelwelle (1) umlaufenden Ringnut geführt sind.

4. Multifunktionsspindel nach Anspruch 2, **dadurch gekennzeichnet,**
**dass** jede Ringnut Zuführbohrungen (17, 18, 20, 21) für Hydraulik aufweist, wobei die Bohrungen (17, 18, 20, 21) jeweils beabstandet voneinander an den beiden Endabschnitten der durch eine Druckraumtrennung (19) unterbrochenen Ringnuten angeordnet sind.

5. Multifunktionsspindel nach Anspruch 1, **dadurch gekennzeichnet,**
**dass** das Spindelgehäuse (2) mit mindestens zwei voneinander unabhängigen Drehdurchführungen (11, 12, 23) ausgestattet ist, wobei mindestens eine dieser Drehdurchführungen (11) zur Aufnahme von hydraulischen Zuführungskanälen für eine hydrodynamische Lagerung der Spindelwelle (1) ausgestaltet ist, welche in Folge eines definiert abgestimmten Leckölstromes aus den Steuerkanälen der Drehdurchführung (11) durch Überlagerung mit der Maschinenspindeldrehzahl entsteht und wobei die mindestens eine andere Drehdurchführung (12, 23) zur zentrischen Durchführung von Kühlschmierstoff und Pneumatik ausgestaltet ist.

## Claims

1. Multifunctional spindle for a machine tool for machining workpieces, comprising a spindle housing (2), a rotary drive and a tool holder unit (9), wherein the tool holder unit (9) is arranged inside the spindle housing (2) and is designed to pivot relative to the spindle housing (2) about an axis (10) lying transversely to the axis of rotation (24),
**characterised in**
**that** at least two measuring systems (14) arranged directly next to one another and functioning independently of one another are connected to the tool holder unit (9) for detecting identical position angles of the tool holder unit (9), wherein there is a transmission unit connected to the measuring systems (14) that provides two transmission paths functioning independently of one another, wherein the measuring systems (14) are configured to transmit measured position angle signals via the transmission paths to a control system of a machine tool equipped with the multifunctional spindle, wherein one of the transmission paths can be used to control the position of the swivel axis lying (10) transversely to the drive axis and the other transmission path can be used to establish the functional safety of the swivel axis lying transversely to the drive axis, and wherein the transmission unit is configured to contactlessly supply the two measuring systems (14) with power, wherein the transmission unit consists of at least two parts configured to rotate relative to each other at spindle speed, and wherein the transmission unit has a central bore through which media channels are centrically guided.

2. Multifunctional spindle according to Claim 1,
**characterised in that** the spindle shaft (1) has at least two axially adjacent annular grooves with a ring segment (7, 22) arranged inside each one that can be hydraulically pressurised via channels in such a way that its relative position within the annular groove is adjustable.

3. Multifunctional spindle according to Claim 2, **characterised**
**in that** a front bearing of the spindle shaft (1) features two separate bearing segments (3', 3") with a first ring segment (7) and a second ring segment (22) arranged between the bearing segments (3', 3") at a close distance from each other, each of which has a circular ring-shaped contour and is guided in its own annular groove running circumferentially around the spindle shaft (1).

4. Multifunctional spindle according to Claim 2, **characterised in**
**that** each annular groove has feed bores (17, 18, 20, 21) for hydraulics, wherein the bores (17, 18, 20, 21) are arranged, spaced apart from one another, at the two end sections of the annular grooves that are interrupted by a pressure chamber partition (19).

5. Multifunctional spindle according to Claim 1, **characterised in**
**that** the spindle housing (2) is equipped with at least two rotary feedthroughs (11, 12, 23) functioning independently of one another, wherein at least one of these rotary feedthroughs (11) is configured to accommodate hydraulic feed channels for hydrodynamic bearing of the spindle shaft (1), the hydrodynamic bearing being generated as a result of a defined, coordinated leak oil flow from the control channels of the rotary feedthrough (11) in interaction with the machine spindle speed, and wherein at least one other rotary feedthrough (12, 23) is configured for the central passage of cooling lubricant and pneumatic media.

## Revendications

1. Broche multifonction pour une machine-outil d'usinage de pièces par enlèvement de copeaux , comprenant un carter de broche (2), un entraînement rotatif et une unité porte-outil (9), ladite unité porte-outil (9) étant disposée à l'intérieur du carter de broche (2) et conçue pour pouvoir pivoter par rapport au carter de broche (2) autour d'un axe (10) perpendiculaire à l'axe de rotation (24), **caractérisée en ce**
**qu'**au moins deux systèmes de mesure (14) indépendants l'un de l'autre et disposés directement l'un à côté de l'autre sont raccordés à l'unité porte-outil (9) afin de détecter des angles de position identiques de l'unité porte-outil (9), une unité de transmission raccordée aux systèmes de mesure (14) étant prévue, laquelle met à disposition deux voies de transfert indépendantes l'une de l'autre, les systèmes de mesure (14) étant conçus pour transmettre à la commande d'une machine-outil équipée de la broche multifonction des signaux d'angle de position mesurés via les voies de transfert, l'une des voies de transfert pouvant être utilisée pour réguler la position de l'axe de pivotement (10) situé perpendiculairement à l'axe d'entraînement et l'autre voie de transfert pour établir la sécurité fonctionnelle de l'axe de pivotement situé perpendiculairement à l'axe d'entraînement, et l'unité de transmission étant conçue pour alimenter sans contact les deux systèmes de mesure (14) en énergie, l'unité de transmission étant au moins en deux parties conçues pour tourner l'une par rapport à l'autre à la vitesse de rotation de la broche, et l'unité de transmission présentant un alésage central dans lequel des canaux de fluide sont guidés de manière centrée.

2. Broche multifonction selon la revendication 1, **caractérisée en ce que**
l'arbre de broche (1) présente au moins deux rainures annulaires placées côte à côte dans le sens axial, chacune contenant un segment annulaire (7, 22) sur lequel une pression hydraulique peut être appliquée via des canaux de manière à pouvoir en régler la position relative à l'intérieur de la rainure annulaire.

3. Broche multifonction selon la revendication 2, **caractérisée en ce**
**qu'**un palier avant de l'arbre de broche (1) est équipé de deux segments de palier distincts (3', 3") et **en ce qu'**un premier segment annulaire (7) et un second segment annulaire (22) présentant chacun un contour circulaire et guidés respectivement dans une rainure circulaire située sur le pourtour de l'arbre de broche (1) dans le sens circonférentiel, sont disposés entre les segments de palier (3', 3") à une faible distance l'un de l'autre.

4. Broche multifonction selon la revendication 2, **caractérisée en ce que**
chaque rainure annulaire présente des alésages d'alimentation (17, 18, 20, 21) hydraulique, lesdits alésages (17, 18, 20, 21) situés respectivement à distance les uns des autres étant disposés sur les deux parties d'extrémité des rainures annulaires interrompues par une séparation de chambre de pression (19).

5. Broche multifonction selon la revendication 1, **caractérisée en ce que**
le carter de broche (2) est équipé d'au moins deux passages rotatifs indépendants l'un de l'autre (11, 12, 23), dont au moins l'un de ces passages rotatifs (11) est conçu pour recevoir des canaux d'alimentation hydraulique pour le support hydrodynamique de l'arbre de broche (1), lequel est assuré par un flux d'huile de fuite défini provenant des canaux de commande du passage rotatif (11) en interaction avec la vitesse de rotation de la broche de la machine, et au moins l'un des autres passages rotatifs (12, 23) étant conçu pour le passage centré du lubrifiant réfrigérant et de la pneumatique.
